# EUROPEAN PATENT APPLICATION

(11) **EP 2 746 511 A2**
(43) Date of publication of application: **25.06.2014**
(21) Application number: 13197902.3
(22) Date of filing: 18.12.2013
(51) Int. Cl.: E05F 11/48

(54) **Drive apparatus for a vehicle part**

(30) Priority: 18.12.2012 JP 2012275794
(71) Applicant: AISIN SEIKI KABUSHIKI KAISHA, Kariya-shi, Aichi-ken 448-8650 (JP)
(72) Inventor: Chono, Katsumi, Kariya-shi, Aichi-ken, 448-8650 (JP); Karayama, Hidefumi, Kariya-shi, Aichi-ken, 448-8650 (JP); Suzuki, Shigeyuki, Karya-shi, Aichi-ken, 448-8650 (JP); Kotani, Takuya, Kariya-shi, Aichi-ken, 448-0027 (JP)
(74) Representative: Intès, Didier Gérard André

(57) **Abstract**

A drive apparatus (1) for a vehicle includes a rotation member (11) driven to rotate by a drive source (10), the rotation member around which a rope member (C1, C2) connected to a drive object (16, 17) is wound, a support member (2) including an accommodating portion (20) rotatably accommodating the rotation member, the accommodating portion including a bottom wall portion (23) that covers an end surface (11 b) of the rotation member at one side in an axial direction of the rotation member and a peripheral wall portion (21) formed to project from the bottom wall portion and covering a side surface (11 a) of the rotation member, and a cover member (30) attached to the support member and covering an opening edge of the accommodating portion.

## Description

### TECHNICAL FIELD

This disclosure generally relates to a drive apparatus for a vehicle.

### BACKGROUND DISCUSSION

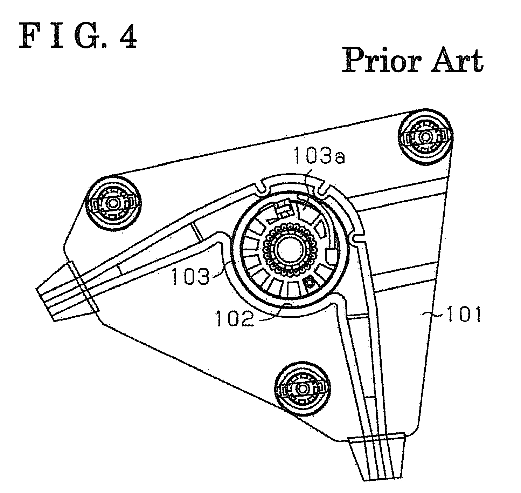

A known drive apparatus for a vehicle is disclosed, for example, in DE102009033472A1 which will be hereinafter referred to as Reference 1. According to the drive apparatus disclosed in Reference 1, as illustrated in Fig. 4, a drum 103 substantially in a cylindrical form is rotatably accommodated within an accommodating portion 102 formed at a support member 101 that is made of resin material. The accommodating portion 102 is formed in a cylindrical form including a bottom. The drum 103 is connected to a drive source corresponding to an electric motor, for example, so as to be driven thereby. A driving force of the drive source is appropriately transmitted to a drive object via a cable wound at the drum 103.

In the drive apparatus disclosed in Reference 1, an end surface 103a of the drum 103 at an axial one end (i.e., at a front side of a sheet of drawing of Fig. 4), the drum 103 being accommodated within the accommodating portion 102, is exposed to the outside of the accommodating portion 102. Thus, an attack to the drum 103 from the outside may be relatively easily permitted, which may lead to a possible malfunction of the cable and the drive object connected to the cable.

A need thus exists for a drive apparatus for a vehicle which may make difficult an attack to a drive object causing a malfunction thereof from the outside.

### SUMMARY

According to an aspect of this disclosure, a drive apparatus for a vehicle includes a rotation member driven to rotate by a drive source, the rotation member around which a rope member connected to a drive object is wound, a support member including an accommodating portion rotatably accommodating the rotation member, the accommodating portion including a bottom wall portion that covers an end surface of the rotation member at one side in an axial direction of the rotation member and a peripheral wall portion formed to project from the bottom wall portion and covering a side surface of the rotation member, and a cover member attached to the support member and covering an opening edge of the accommodating portion.

Accordingly, the end surface of the rotation member at one side in the axial direction of the rotation member and the side surface of the rotation member are covered by the accommodating portion, specifically, by the bottom wall portion and the peripheral wall portion. In addition, an end surface of the rotation member at the other side in the axial direction is covered by the cover member that is attached to the support member to cover the opening edge of the accommodating portion. Accordingly, a substantially entire outline of the rotation member is covered. An attack to the rotation member from the outside may be made difficult and a possibility of malfunction of the rope member or the drive object connected to the rope member may be reduced.

The accommodating portion may include at least one slit formed by cutting a portion of the peripheral wall portion in a circumferential direction thereof.

Accordingly, even in a case where rain or water, for example, enters a void defined between the accommodating portion and the cover member, such rain or water may be discharged through the slit.

The rotation member may be a drum around which the rope member is wound, and a plurality of slits may be formed at the accommodating portion.

Accordingly, in a process of accommodating the rotation member in the accommodating portion, plural holding pieces provided at an appropriate jig may be positioned to face the respective slits in the circumferential direction in a case where the side surface of the rotation member is held by the holding pieces so as to insert the rotation member into the accommodating portion. Therefore, the rotation member may be inserted deeply to the accommodating portion without an interference between the holding pieces and the peripheral wall portion. Specifically, the rope member is basically wound at the rotation member before the rotation member is accommodated to the accommodating portion. Thus, even though an operator is bothered by the rope member, the rotation member may be smoothly and deeply inserted to the accommodating portion.

An output shaft of the drive source may be inserted to be positioned within the rotation member to integrally rotate with the rotation member, the output shaft being formed to project from a side where the bottom wall portion is provided. The cover member may include a bearing portion that supports the output shaft, the cover member being made of a metallic material.

Accordingly, an end portion of the output shaft protruding from the rotation member is pivotally supported by the bearing portion of the cover member. Thus, a shaft misalignment of the output shaft may be restrained. The rotation operation of the rotation member may be further stabilized.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view illustrating an embodiment disclosed here;
Fig. 2 is a perspective view illustrating an assembly process of the embodiment;
Fig. 3 is a schematic view illustrating a window regulator apparatus according to the embodiment; and
Fig. 4 is a side view of a known drive apparatus for a vehicle.

### DETAILED DESCRIPTION

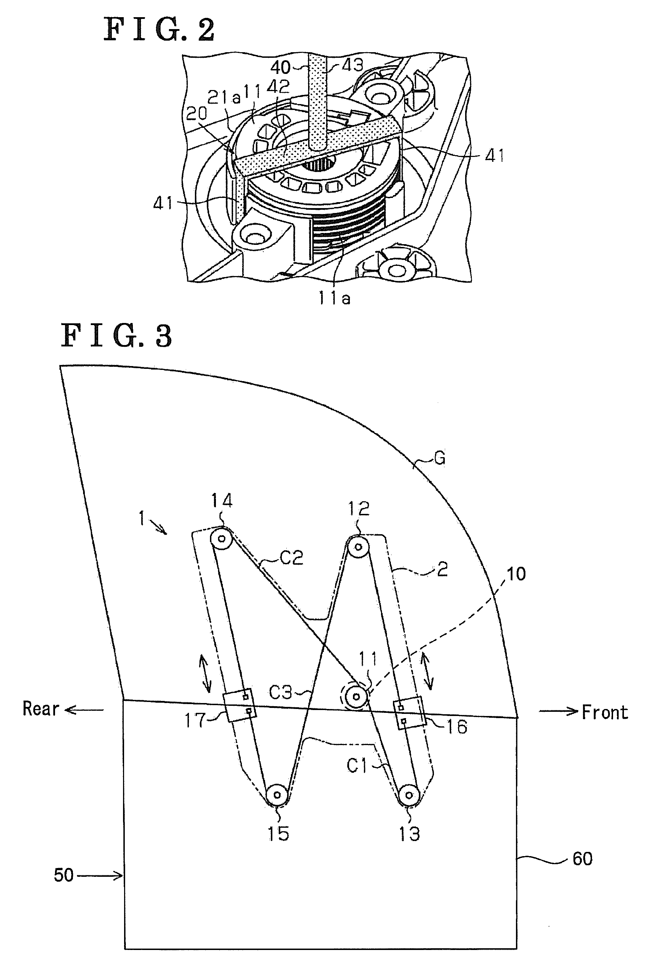

A window regulator apparatus for a vehicle, for example, according to an embodiment will be explained with reference to the attached drawings. As illustrated in Fig. 3, a window regulator apparatus 1 includes a support member 2 formed in a substantially H-shape and made of resin material. The support member 2 is assembled on an inside of a vehicle door 50 that is provided at a lower side than a window frame. Specifically, the support member 2 is assembled on an inner panel 60 of the vehicle door 50. A drum 11 serving as a rotation member is rotatably supported at a center portion of the support member 2. In addition, front pulleys 12 and 13 are rotatably supported at an upper end portion and a lower end portion of the support member 2 in a forward direction of a vehicle and rear pulleys 14 and 15 are rotatably supported at the upper end portion and the lower end portion of the support member 2 in a rear direction of the vehicle.

A front guide 16 serving as a drive object is assembled on the support member 2 to be movable in a substantially up and down direction along a front end portion of the support member 2. In addition, a rear guide 17 serving as the drive object is assembled on the support member 2 to be movable in the substantially up and down direction along a rear end portion of the support member 2. The front guide 16 and the rear guide 17 are configured to move substantially parallel to each other and to fix and support a lower edge portion of a window glass G. Thus, the front guide 16 and the rear guide 17 move in the substantially up and down direction along the support member 2 so that the window glass G moves upward and downward.

A first cable C1 serving as a rope member of which one end engages with the drum 11 extends diagonally forward, i.e., extends forward and downward, to the front pulley 13 to be wound around the front pulley 13. Then, the first cable C1 extends diagonally rearward, i.e., extends rearward and upward, to engage with the front guide 16 at the other end of the first cable C1. In the same way, a second cable C2 serving as the rope member of which one end engages with the drum 11 extends diagonally rearward, i.e., extends rearward and upward, to be wound around the rear pulley 14. Then, the second cable C2 extends diagonally forward, i.e., extends forward and downward, to engage with the rear guide 17 at the other end of the second cable C2. The respective one ends of the first and second cables C1 and C2 are wound at the drum 11 so that one of the first and second cables C1 and C2 is reeled out or fed out while the other of the first and second cables C1 and C2 is reeled in or fed in.

A third cable C3 of which one end engages with the front guide 16 extends diagonally rearward, i.e., extends rearward and upward, to the front pulley 12 to be wound around the front pulley 12 and extends diagonally rearward, i.e., extends rearward and downward, to the rear pulley 15 to to be wound around the rear pulley 15. Then, the third cable C3 engages with the rear guide 17 at the other end of the third cable C3.

Accordingly, in a case where the first cable C1 is reeled in while the second cable C2 is reeled out in association with a rotation of the drum 11 in one direction, for example, the front guide 16 connected to the first cable C1 is pulled down and the rear guide 17 connected to the front guide 16 via the third cable C3 is pulled down. Then, the window glass G of which the lower edge portion is fixed to the front guide 16 and the rear guide 17 moves downward.

On the other hand, in a case where the second cable C2 is reeled in while the first cable C1 is reeled out in association with the rotation of the drum 11 in the other direction, for example, the rear guide 17 connected to the second cable C2 is pulled up and the front guide 16 connected to the rear guide 17 via the third cable C3 is pulled up. Then, the window glass G of which the lower edge portion is fixed to the front guide 16 and the rear guide 17 moves upward.

The drum 11 is connected to an appropriate drive source 10, for example, to an electric motor, to be driven thereby. Thus, the drum 11 is driven to rotate by the drive source 10 so that each of the cables C1, C2, and C3 is fed in or fed out, for example.

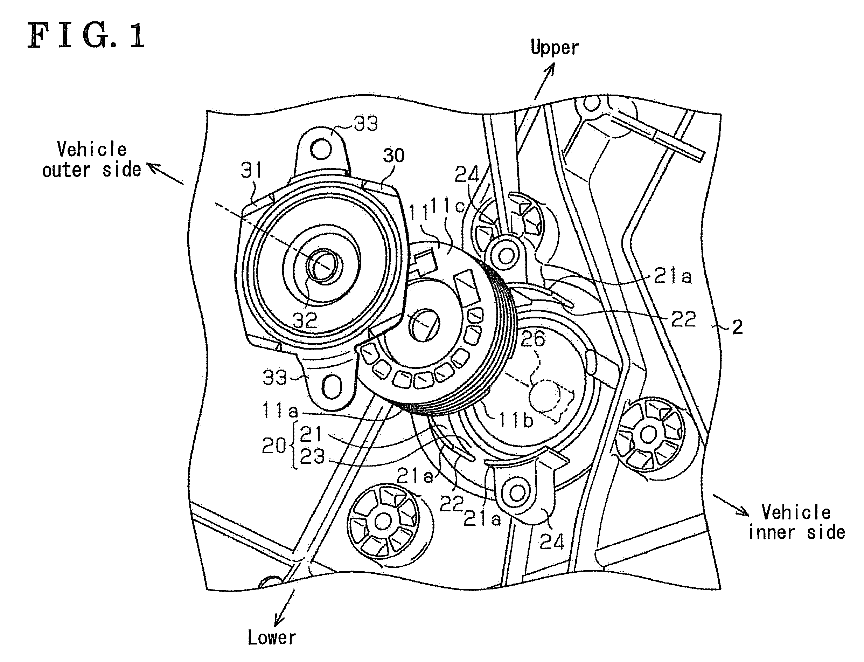

Next, a configuration for accommodating the drum 11 by the support member 2 will be explained. As illustrated in Fig. 1, the support member 2 includes a peripheral wall portion 21 in a substantially cylindrical form and coaxial with the drum 11. The peripheral wall portion 21 is formed to project towards an outside of the vehicle in a width direction thereof. Plural slits 22 are formed at the peripheral wall portion 21, each of the slits 22 being formed by cutting a portion of the peripheral wall portion 21 in a circumferential direction thereof. That is, the peripheral wall portion 21 is formed by plural vertical walls 21 a each in a substantially partial cylindrical form and arranged between the slits 22 adjacent to each other. The slits 22 function as lead ports for the first cable C1 and the second cable C2 extending from the drum 11 to the front pulley 13 and to the rear pulley 14 respectively.

The support member 2 also includes a bottom wall portion 23 in a substantially annular form and coaxial with the peripheral wall portion 21. The bottom wall portion 23 is formed at an inner circumferential side of the peripheral wall portion 21 at which a base portion thereof is continuously formed. That is, the peripheral wall portion 21 is formed to project from the bottom wall portion 23 to the outside of the vehicle in the width direction. An outer diameter of the bottom wall portion 23, i.e., an inner diameter of the peripheral wall portion 21, is specified to be greater than an outer diameter of the drum 11. In addition, an inner diameter of the bottom wall portion 23 is specified to be smaller than the outer diameter of the drum 11. The peripheral wall portion 21 and the bottom wall portion 23 constitute an accommodating portion 20.

The support member 2 further includes a pair of attachment portions 24 each serving as a base portion or a seat portion. The attachment portions 24 project in a radial direction corresponding to directions away from each other relative to the peripheral wall portion 21 (i.e., up and down direction in Fig. 1). One of the slits 22 formed at the peripheral wall portion 21 is positioned to open downward (i.e., open in the gravity direction) in a state where the window regulator apparatus 1 is mounted to the vehicle door 50. The peripheral wall portion 21 is arranged to project to the outer side of the vehicle in a state where the window regulator apparatus 1 is mounted to the vehicle door 50. On the other hand, the drive source 10 that drives the drum 11 is mounted to the inner side of the vehicle relative to the support member 2. An output shaft 26 of the drive source 10 is loosely inserted to the bottom wall portion 23 so as to extend coaxially with the drum 11 from the inner side of the vehicle relative to the support member 2.

The drum 11 is rotatably inserted to be positioned at the accommodating portion 20 in a state where an axis of the drum 11 substantially matches a center line of the accommodating portion 20. The drum 11 includes a side surface 11 a, a portion of which is covered by the peripheral wall portion 21, and an end surface 11 b at one end in an axial direction of the drum 11 (which will be hereinafter referred to as a first end surface 11 b). An outer circumferential portion of the first end surface 11 b is covered by the bottom wall portion 23. In a state where the drive source 10 is mounted to the support member 2, the output shaft 26 is inserted to be positioned at a center portion of the drum 11 accommodated in the accommodating portion 20 so that the drive source 10 integrally rotates with the drum 11. At this time, an end portion of the output shaft 26 is configured to project to the outer side of the vehicle by penetrating through the drum 11. In Fig. 1, the output shaft 26 is illustrated so as to be pulled back in the axial direction for convenience.

A cover member 30 is assembled on the support member 2. The cover member 30 formed, for example, by a metallic plate (iron, for example) is configured to cover an opening edge, in the axial direction, of the accommodating portion 20 accommodating the drum 11. The cover member 30 includes a body portion 31 in a substantially square plate form spreading wider than the opening of the accommodating portion 20, and a bearing portion 32 formed in a substantially boss form at a center portion of the body portion 31. The cover member 30 includes a pair of attachment pieces 33 each in a flange form projecting in the radial direction corresponding to directions away from each other from the body portion 31 (i.e., up and down direction in Fig. 1).

The cover member 30 is assembled so that the body portion 31 covers the opening edge of the accommodating portion 20 and the attachment pieces 33 overlap the attachment portions 24 respectively. An appropriate fastener, for example, a tapping screw or a bolt, penetrating through each of the attachment pieces 33 is tightened to each of the attachment portions 24 so that the cover member 30 is fixed to the support member 2. Thus, an end surface 11c of the drum 11 at the other end in the axial direction (which will be hereinafter referred to as a second end surface 11c) is covered by the cover member 30 covering the opening edge of the accommodating portion 20. At this time, the end portion of the output shaft 26 penetrating through the drum 11 is inserted to the bearing portion 32 to be pivotally supported thereby.

An inner circumferential portion of the first end surface 11 b of the drum 11, i.e., a portion of the first end surface 11 b positioned at the radially inner side relative to the bottom wall portion 23, is exposed from the support member 2. Nevertheless, because the support member 2 in the window regulator apparatus 1 is assembled on the inner panel 60 that defines the inside of the vehicle door 50, the first end surface 11 b of the drum 11 is hidden from the outside of the vehicle relative to the inner panel 60.

The first end surface 11 b and the side surface 11 a of the drum 11 are covered by the accommodating portion 20, specifically, by the bottom wall portion 23 and the peripheral wall portion 21 respectively. In addition, the second end surface 11c of the drum 11 is covered by the cover member 30 that is assembled on the support member 2 to cover the opening edge of the accommodating portion 20. Accordingly, a substantially entire outline of the drum 11 is covered, which may make difficult an attack to the drum 11 from the outside.

Next, a process for accommodating the drum 11 to the accommodating portion 20 will be explained. As illustrated in Fig. 2, a jig 40 is used for inserting the drum 11 into the accommodating portion 20. In Fig. 2, the jig 40 is illustrated with a pattern for convenience.

The jig 40 integrally includes a pair of holding pieces 41 each substantially in the form of a hook extending in parallel with the axis of the drum 11, a connection portion 42 connecting respective base ends of the holding pieces 41 each other in the radial direction, and a handle portion 43 connected to a center portion of the connection portion 42 in a lengthwise direction and extending in the axial direction of the drum 11. A distance between the holding pieces 41 is specified to be slightly smaller than a diameter of the drum 11.

The jig 40 is attached to the drum 11 in a state where the connection portion 42 is arranged to cross the radial direction of the drum 11. Thus, the drum 11 is held by the holding pieces 41 at the side surface 11a. Before the jig 40 is attached to the drum 11, the first cable C1 and the second cable C2 are wound at the drum 11. That is, the jig 40 is attached to the drum 11 in a state where the first cable C1 and the second cable C2 are wound at the drum 11. In the aforementioned state, the pair of holding pieces 41 is positioned to face a pair of the slits 22 in the circumferential direction to thereby insert the drum 11 into the accommodating portion 20 along the axial direction. That is, each of the slits 22 includes an opening width in the circumferential direction so that each of the holding pieces 41 is insertable to the slit 22, i.e., an opening width in the circumferential direction so that an operator's finger may enter the slit 22, for example. As a result, the drum 11 is inserted deeply into the accommodating portion 20 without interference between the holding pieces 41 and the peripheral wall portion 21. Thereafter, the jig 40 is removed from the drum 11 to complete the process of accommodating the drum 11 in the accommodating portion 20.

According to the aforementioned embodiment, the outline of the drum 11 is substantially entirely covered. Thus, an attack to the drum 11 from the outside may be made difficult, which reduces a possibility of malfunction of the first and second cables C1 and C2, and/or the front and rear guides 16 and 17 connected to the first and second cables C1 and C2. For example, the front guide 16 and the rear guide 17 may be restrained from moving downward together with the window glass G because of the attack to the drum 11 from the outside. Consequently, improved security may be obtained.

In addition, according to the aforementioned embodiment, each of the slits 22 is formed at the peripheral wall portion 21 by cutting a portion thereof in the circumferential direction. Thus, even in a case where rain or water enters a void formed between the accommodating portion 20 and the cover member 30, for example, such rain or water may be discharged through the slits 22. Specifically, one of the slits 22 is arranged to open downwardly, i.e., open in the gravity direction. Thus, rain or water that enters the aforementioned void may be further smoothly discharged. In the void formed between the accommodating portion 20 and the cover member 30, rain or water, for example, is likely to enter by falling down the first and second cables C1 and C2 connected to the drum 11. Immediate water discharge is effective for restraining accumulation of water or inhibiting breakage of the first and second cables C1 and C2 caused by freezing or rust, for example.

Further, according to the aforementioned embodiment, in the process of accommodating the drum 11 in the accommodating portion 20, the plural (i.e., pair of) holding pieces 41 provided at the jig 40 are positioned to face the respective slits 22 in the circumferential direction in a case where the side surface 11 a of the drum 11 is held by the holding pieces 41 so as to insert the drum 11 into the accommodating portion 20. Therefore, the drum 11 may be inserted deeply to the accommodating portion 20 without the interference between the holding pieces 41 and the peripheral wall portion 21. Specifically, the first cable C1 and the second cable C2 are basically wound at the drum 11 before the drum 11 is accommodated to the accommodating portion 20. Thus, even though the operator is bothered by the first and second cables C1 and C2, the drum 11 may be smoothly and deeply inserted to the accommodating portion 20. In addition, in a case where the drum 11 is inserted to the accommodating portion 20, the first and second cables C1 and C2 may be restrained from being dislocated because of the holding pieces 41.

Furthermore, according to the aforementioned embodiment, the end portion of the output shaft 26 protruding from the drum 11 is pivotally supported by the bearing portion 32 of the cover member 30. Thus, a shaft misalignment of the output shaft 26 may be restrained. The rotation operation of the drum 11 may be further stabilized.

Furthermore, according to the aforementioned embodiment, the drum 11 is inserted to the accommodating portion 20 of the support member 2 along the axial direction thereof, and further the cover member 30 is assembled on and tightened to the support member 2 along the axial direction. Thus, a single assembly direction is achieved to thereby reduce assembly hours.

Furthermore, according to the aforementioned embodiment, the cover member 30 is formed by a metallic plate. Thus, even in a case where the drum 11 relative to which each of the first cable C1 and the second cable C2 reels in and out is displaced in the axial direction by receiving a reaction force from the first and second cables C1 and C2, the cover member 30 may withstand a load from the drum 11, thereby restraining malfunction of the window regulator apparatus 1.

The aforementioned embodiment may be modified or changed as follows. In the embodiment, the bearing portion 32 of the cover member 30 may be omitted. In this case, the cover member 30 may be made of other material than metallic metal, for example, made of resin material.

In the embodiment, the number of slits 22 formed at the peripheral wall portion 21 of the support member 2 may be appropriately specified. In a case where three or more of the slits 22 are provided, two of the slits 22 may be desirably arranged to face each other in the radial direction so that the peripheral wall portion 21 and the holding pieces 41 holding the drum 11 are inhibited from interfering with each other. Alternatively, three or more of the holding pieces 41 that are positioned to face three or more of the slits 22 in the circumferential direction may hold the side surface 11 a of the drum 11.

In the embodiment, a single slit 22 may be provided. In this case, the slit 22 may be desirably arranged to open downward, i.e., to open in the gravity direction. Alternatively, the slit 22 may not be formed.

In the embodiment, the peripheral wall portion 21 may be in the form of a substantially polygonal cylinder or a substantially partially polygonal cylinder. The cover member 30 may be fastened to the support member 2 via three portions or more. That is, three or more of the attachment pieces 33 may be provided to correspond to three or more of the attachment portions 24. The configuration for attaching the cover member 30 and the support member 2 to each other may be appropriately specified. For example, the cover member 30 and the support member 2 may be fitted to each other to be connected, or connected to each other by engagement between an engagement protrusion formed at one of the cover member 30 and the support member 2 and an engagement bore formed at the other of the cover member 30 and the support member 2.

In the embodiment, the first to third cables C1, C2, and C3 may be formed as a single continuous cable. In this case, a single guide (corresponding to the front and rear guides 16 and 17) may be provided for fixing and supporting the window glass G. In addition, instead of the drum 11, the pulleys 12 to 15, and the first to third cables C1, C2, and C3, a driving gear, a driven gear and a toothed belt meshed with the driving gear and the driven gear may be provided. In this case, the toothed belt may be a single continuous belt and a single guide (corresponding to the front and rear guides 16 and 17) may be provided for fixing and supporting the window glass G.

In the embodiment, instead of the drum 11, the pulleys 12 to 15, and the first to third cables C1, C2, and C3, a driving chain sprocket, a driven chain sprocket, and a chain wound around the driving chain sprocket and the driven chain sprocket may be provided. In this case, the chain may be a single continuous chain and a single guide (corresponding to the front and rear guides 16 and 17) may be provided for fixing and supporting the window glass G.

In the embodiment, the drum 11 may be made of other material than resin material, for example, made of metallic material. The embodiment is applicable to a rotation member (for example, a drum) related to an opening and closing driving of a vehicle door corresponding to a swing door, a slide door, or a back door, for example, and a configuration for accommodating the rotation member by a support member. Alternatively, the embodiment is applicable to the rotation member (for example, the drum) related to the opening and closing driving of a movable panel mounted to a roof portion of a vehicle, and a configuration for accommodating the rotation member by the support member. Further alternatively, the embodiment is applicable to the rotation member (for example, the drum) related to a driving of an exterior part corresponding to a movable grille shutter or a movable spoiler, for example, or a power seat, and a configuration for accommodating the rotation member by the support member.

According to the window regulator apparatus 1 including a drive apparatus for a vehicle, the drive target corresponds to the guide 16, 17 fixing and supporting the window glass G.

## Claims

1. A drive apparatus (1) for a vehicle, comprising:
a rotation member (11) driven to rotate by a drive source (10), the rotation member (11) around which a rope member (C1, C2) connected to a drive object (16, 17) is wound;
a support member (2) including an accommodating portion (20) rotatably accommodating the rotation member (11), the accommodating portion (20) including a bottom wall portion (23) that covers an end surface (11 b) of the rotation member (11) at one side in an axial direction of the rotation member (11) and a peripheral wall portion (21) formed to project from the bottom wall portion (23) and covering a side surface (11 a) of the rotation member (11); and
a cover member (30) attached to the support member (2) and covering an opening edge of the accommodating portion (20).

2. The drive apparatus according to claim 1, wherein the accommodating portion (20) includes at least one slit (22) formed by cutting a portion of the peripheral wall portion (21) in a circumferential direction thereof.

3. The drive apparatus according to claim 2, wherein the rotation member (11) is a drum (11) around which the rope member (C1, C2) is wound, and a plurality of slits (22) are formed at the accommodating portion (20).

4. The drive apparatus according to any one of claims 1 through 3, wherein an output shaft (26) of the drive source (10) is inserted to be positioned within the rotation member (11) to integrally rotate with the rotation member (11), the output shaft (26) being formed to project from a side where the bottom wall portion (23) is provided, and wherein the cover member (30) includes a bearing portion (32) that supports the output shaft (26), the cover member (30) being made of a metallic material.
